# EUROPEAN PATENT APPLICATION

(11) **EP 4 361 942 A1**
(43) Date of publication of application: **01.05.2024**
(21) Application number: 22204216.0
(22) Date of filing: 27.10.2022
(51) Int. Cl.: G06T 7/00, G06V 10/94

(54) **SYSTEM AND METHOD FOR SEGMENTING AN OBJECT IN IMAGE DATA**

(71) Applicant: Koninklijke Philips N.V., 5656 AG Eindhoven (NL)
(72) Inventor: OKEL, Sanne Emmarentia, Eindhoven (NL); GEURTS, Lucas Jacobus Franciscus, Eindhoven (NL); PLUYTER, Jon Ragnar, 5656AG Eindhoven (NL); HEESTERBEEK, Lynn Jorien Jacinda, 5656AG Eindhoven (NL); JACOBS, Igor, Eindhoven (NL); YU, Bin, Eindhoven (NL); RASENBERG, Diederik, Eindhoven (NL); VAN DER VEN, John, Eindhoven (NL); RAIJMAKERS, Jeroen, Eindhoven (NL)
(74) Representative: Philips Intellectual Property & Standards

(57) **Abstract**

A system and computer-implemented method are provided for segmenting an object in image data. For that purpose, a segmentation of the object is obtained, which segmentation includes image elements of the image data which are probable part of the object by a probability value of a respective image element exceeding a probability threshold. More specifically, during operation of the system and method, a first segmentation of the object is obtained using a first probability threshold and a second segmentation of the object is obtained using a second probability threshold. Both segmentations are visualized, which provides a user with a visual indication of how much, and in which way, the segmentation changes depending on the confidence. This way, qualitative feedback on the segmentation is provided to the user, which may increase the trust of the user in the segmentation and facilitate its adoption by the user.

## Description

### FIELD OF THE INVENTION

The invention relates to a system and computer-implemented method for segmenting an object in image data. The invention further relates to a computer-readable medium comprising instructions for a computer program, the computer program comprising instructions to cause a processor system to perform the computer-implemented method.

### BACKGROUND OF THE INVENTION

Object segmentation is used in many application areas, for example in automotive to detect obstacles on the road ahead, in security to detect trespassers, etc. Increasingly, object segmentation is based on Artificial Intelligence (AI). For example, machine learned models may be trained on training data to learn to classify individual pixels or voxels as belonging to a particular object, e.g., to a cat or a dog or to background.

While machine learned segmentation models, or in general AI-based segmentation models, show great potential, the adoption of such models remains low in many application areas. One example is the clinical domain, where the adoption into clinical practice remains low. One of the reasons for such a lack of adoption is the amount of trust a clinician has in the AI-based segmentation model. On the one hand, a clinician may over-trust the AI-based segmentation model, which could lead to mistakes that would not have been made in the absence of AI. On the other hand, a clinician may under-trust the AI-based segmentation model, which may result in sub-optimal use of AI. Ideally, however, a clinician would have an appropriate level of trust, meaning an amount of trust which matches the actual performance of the AI-based segmentation model at its current stage of development.

It has been suggested that it may be helpful to communicate the uncertainty of the AI-based segmentation model to the user, e.g., to a clinician or radiologist, in order to instil the user with an appropriate level of trust in the AI-based segmentation model. Properly implemented communication of such AI model uncertainty may indeed have multiple advantages. Firstly, the communicated uncertainty may suggest to what extent a model may be trusted. Secondly, in the clinical domain, communicating uncertainty may support the conversation between radiologist, surgeon, and patient and/or between medical specialists, to enable better assessment of potential risks. Thirdly, recent research suggests that by communicating uncertainty, the negative effect of an AI model mistake may be decreased due to increased situational awareness and increased understanding of the model [1]. Fourth, a user may potentially reduce the uncertainty through interface interaction, based on their domain knowledge. For example, uncertainty in an AI-based contour of a tumour on a CT image might be reduced by letting a radiologist review and correct the AI output.

Reference [2] describe a method for determining a confidence level of image segmentation in a medical imaging process. The method is described to determine a confidence level associated with the result of image segmentation in applications where there is no ground truth to compare with the segmentation result. The method includes visualizing the confidence level for respective boundary portion of a segmented object.

### References

[1] Siegling, L.B. (2020). Uncertainty Communication by AI Assistants: The Effects on User Trust.
[2] US 2021004965 A1

### SUMMARY OF THE INVENTION

In a first aspect of the invention, a system is provided for segmenting an object in image data, comprising:
- an input interface for accessing the image data;
- a processor subsystem configured to:
   - obtain a segmentation of the object, wherein the segmentation is comprised of image elements of the image data which are probable part of the object by a probability value of a respective image element exceeding a probability threshold, wherein the obtaining of the segmentation comprises obtaining a first segmentation of the object using a first probability threshold and a second segmentation of the object using a second probability threshold; and
   - generate display data comprising a visual representation of the first segmentation and a visual representation of the second segmentation; and
- a display output interface for displaying the display data on a display.

In a further aspect of the invention, a computer-implemented method is provided for segmenting an object in image data, comprising:
- accessing the image data;
- obtaining a segmentation of the object, wherein the segmentation is comprised of image elements of the image data which are probable part of the object by a probability value of a respective image element exceeding a probability threshold, wherein the obtaining of the segmentation comprises obtaining a first segmentation of the object using a first probability threshold and a second segmentation of the object using a second probability threshold;
- generating display data comprising a visual representation of the first segmentation and a visual representation of the second segmentation; and
- outputting the display data for display on a display.

In a further aspect of the invention, a transitory or non-transitory computer-readable medium is provided, the computer-readable medium comprising data representing a computer program comprising instructions for causing a processor system to perform a computer-implemented method as described in this specification.

The above aspects of the invention involve accessing image data comprising the object to be segmented. The image data may for example be 3D image data, e.g., in form of an image volume comprised of voxels or a stack of 2D images, or 2D image data, such as a single 2D image. The object shown in the image data may be segmented, for example by applying a classification technique to the image data. Such a classification technique, which may be known per se, may classify individual image elements of the image data as belonging to the object or not. More specifically, the classification by the classification technique may yield a probability map which may indicate, for a respective image element, the probability of the image element belonging to the object. Accordingly, the classification technique may also be referred to as a probabilistic classification technique. The probability may be representative of a certainty of the classification, in that a probability of for example 0.0 (or 0%) or 1.0 (or 100%) may indicate that the classification technique is certain of its classification whereas a probability in-between 0.0 and 1.0 may indicate that there is uncertainty in the classification. Typically, if the probability is 0.5 or 50%, the uncertainty of the classification technique may be highest. As a result of applying the classification technique to the image data, a probability map may be obtained. The probability map may be indicative of the location and shape of the object in the image data as the map indicates which image elements are likely to belong to the object.

Classification techniques as described in the previous paragraph may be known per se, and may be based on machine learning, in that applying the classification technique may comprise applying a machine-learned classification model to the image data. Throughout this specification, a reference to a classification technique may thus be understood as including the use of a machine-learned classification model. Having obtained the probability map as output, a probability threshold may be used to determine for which image elements the probability is sufficiently high to belong to the object. This way, the probabilities of the probability map may be interpreted in a binary-like manner as 'object' and 'not object' (or as 'background' or 'other object'). Alternatively, the classification may provide a probability for several classes of objects (for example 3 classes: 'tumour', 'vessel' and 'other'), in which case at least one probability threshold may be applied to the probabilities of at least one class of objects. The segmentation of the object may be obtained by identifying a region which encompasses all, or at least a significant number of the image elements which are classified as 'object', for example in form of a line contour in 2D or as a 3D mesh delineating the object's boundary in 3D. In some embodiments, the object mask may itself already represent the segmentation of the object as the boundary of the object can be easily perceived in the object mask.

It is noted that while the above refers to the use of a classification technique to obtain the segmentation of the object, the use of a classification technique is not required. For example, instead of using a classification technique, a probabilistic segmentation technique may be used to obtain the segmentations. Such a probabilistic segmentation technique may be directly controlled to output a segmentation in which the image elements included in the segmentation are considered 'probable' to belong to the object, with said probability being selectable using a probability threshold parameter. By using two different values for the parameter, the first segmentation and the second segmentation may be obtained. Another example is that an initial segmentation and a separate uncertainty map may be obtained. From this initial segmentation and uncertainty map, further segmentations may be derived. Namely, the uncertainty map may be indicative of a probability an image element of belonging to a particular object. As such, one or more segmentations may be derived from the initial segmentation using probability thresholds, for example to locally increase the size of the initial segmentation if a lower probability is acceptable or to decrease size if a higher probability is required.

In accordance with the above measures, at least two segmentations of the object may be obtained using different probability thresholds. More specifically, a first segmentation may be obtained by considering only those image elements to belong to the object of which the probability exceeds a first threshold, and a second segmentation may be obtained by considering only those image elements to belong to the object of which the probability exceeds a second threshold, with both thresholds being different. Both segmentations may then be visualized by generating visual representations of the segmentations and displaying these visual representations, e.g., on a display.

Since the segmentations are obtained using different probability thresholds, they may be considered to represent segmentations with different confidences. Namely, when using a lower probability threshold, image elements may be considered to belong to the object which according to the probability map have a lower probability of actually belonging to the object. Effectively, the segmentation obtained using the higher probability threshold represents a smaller segmentation which includes only those image elements of which the probability is relatively high of actually belonging to the object, while the segmentation obtained using the lower threshold is typically a wider segmentation which includes image elements of which it is less certain that they belong to the object. Typically, the segmentation obtained using the higher probability threshold is included in, i.e., represents a subset of, the segmentation obtained using the lower probability threshold.

By visualizing the segmentations to the user, the user can obtain a visual indication of how much, and in which way, the segmentation changes depending on the confidence. This is relevant for the following reasons. Near the boundary of an object, there is typically a transition region in which the probability of belonging to the object transitions from high (e.g., nearer to 1.0 or 100%) to low (e.g., nearer to 0.0 or 0%). The transition region itself may be comprised of intermediate probabilities (e.g., nearer to 0.5 or 50%) which may indicate low confidence. If the transition region is relatively wide, this may be indicative that the exact boundary of the object is relatively unsure. Conversely, if there is only a narrow transition region, this may indicate that the exact boundary of the object is relatively sure. By showing both visualizations, the shift in the boundary of the object may provide an indication of the width of the transition region, which may allow a user to perceive where the segmentation is more or less certain. In particular, the user may obtain feedback of where along the boundary there is more confidence in the boundary (e.g., smaller shift in boundaries between both segmentations) and where there is less confidence (e.g., larger shift in boundaries). This may convey to the user where locally the boundary is deemed to be more certain and where locally the boundary is likely to be less certain. This way, qualitative feedback on the segmentation is provided to the user, which may be used by a user to for example accept or reject a segmentation, to correct a segmentation, or to learn if the algorithmic (un)certainty matches the (un)certainty of the user. In general, such quality feedback may increase the trust of the user in the segmentation and may facilitate its adoption.

While it is known to visualize uncertainty in segmentation as heatmaps which may be overlaid over the image data, the heatmaps typically obstruct a region of interest, e.g., the object boundaries, in the image data. This may for example prevent a radiologist from validating the segmentation in a region based on the underlying image data (which data may be considered ground truth data by clinicians). In addition, the uncertainty information itself may be visualized, but not its consequences. For example, the uncertainty information may be presented as either probabilities or probabilities translated into other modalities (e.g., colour, transparency, size). This may require a user to interpret the consequences of the uncertainty for themselves. The mental effort involved may increase the user's workload and the interpreted consequences can be subjective. In addition, most humans lack natural affinity with statistics and probabilities, therefore hindering accurate interpretation of the raw uncertainty information. By visualizing the segmentations associated with different uncertainties directly, such interpretation may not be needed as the consequences of the different uncertainties are visualized directly, namely by the corresponding segmentations being visualized.

The following embodiments may represent embodiments of the system for segmenting an object in image data but may also represent embodiments of the method for segmenting an object in image data. In such embodiments, the method may comprise one or more further steps corresponding to actions performed by the system.

Optionally, the processor subsystem is configured to:
- obtain a probability map for the image data, for example by applying a classification technique to the image data, wherein the probability map shows, for a respective image element of the image data, a probability of the image element belonging to the object;
- obtain the first segmentation and the second segmentation of the object by, for a respective segmentation, identifying a boundary of the object using the probability map and using a respective probability threshold.

Both segmentations may thus be derived from a single probability map by using the different probability thresholds.

Optionally, the processor subsystem is configured to obtain the segmentation of the object by:
- applying the probability threshold to the probability map to obtain an object mask;
- determining the boundary of the object in the object mask to obtain the segmentation, or using the object mask as the segmentation of the object.

By applying the probability threshold to the probability map, a binary-like object mask may be obtained in which the segmentation of the object may be easily obtained by determining the boundary of the object in the object mask, for example using an edge detection technique or by using a contour finding technique, etc. In some embodiments, the object mask may be directly used as the segmentation of the object as edges in the object mask may already clearly indicate the boundary of the object.

Optionally, the processor subsystem is configured to generate the display data to show the visual representation of the first segmentation and the visual representation of the second segmentation simultaneously or consecutively on the display. The differences in the segmentations may be easily perceived when visualizing both segmentations simultaneously or consecutively. In some examples, the visual representation of the first segmentation and the visual representation of the second segmentation may be shown as respective overlays over the image data. This facilitates the interpretation of the segmentations as they are shown directly over the image data. In some other examples, the overlap between the segmentations may be highlighted. This may further facilitate the interpretation of the segmentations as the user may easily perceive where both segmentations correspond and where they do not correspond.

Optionally, at least one of the first probability threshold and the second probability threshold is user-adjustable. By allowing the user to adjust at least one of both probability thresholds, the user may interactively determine how the segmentation changes as a function of the probability threshold, which may provide further qualitative feedback on the segmentation to the user.

Optionally, the first probability threshold is predetermined or algorithmically selected, and the second probability threshold is user-adjustable. The predetermined or automatically selected probability threshold may provide a reference threshold against which the user-adjustable probability threshold may be compared. For example, the predetermined or automatically selected probability threshold may provide a reference segmentation, e.g., a best segmentation according to a cost function. The user may then adjust the other probability threshold to determine how the segmentation compares to the reference segmentation to obtain an indication how certain the classification technique is of the object boundaries in the reference segmentation.

Optionally, the system further comprises a user input interface for receiving user input data from a user input device operable by a user, wherein the processor subsystem is configured to generate the display data to show a graphical user interface to the user, wherein the graphical user interface comprises a graphical user interface element to enable the user to adjust said probability threshold, for example in form of a slider. A slider is an intuitive way to change the probability threshold.

Optionally, the processor subsystem is configured to, in response to an adjustment of said probability threshold by the user, obtain an adjusted segmentation of the object by reapplying said adjusted probability threshold to the probability map without recalculating the probability map. The calculation of the probability map by the classification technique may be computationally complex. However, when changing a probability threshold, the corresponding segmentation of the object may be obtained without recalculating the probability map. Rather, the probability map obtained by the classification technique may be saved after its calculation and used together with each adjusted probability threshold to calculate a new object map. Compared to the calculation of the probability map, the calculation of the object map is (much) less computationally complex as it may primarily involve a thresholding operation.

Optionally, a probability threshold, for example one which is algorithmically selected or obtained by adjustment by a user, may be saved, for example as a bookmark. In some examples, the saved probability threshold may again be selected by the user via the graphical user interface. In some examples, the saved probability threshold may be used as a default value, e.g., for a next segmentation.

Optionally, the processor subsystem is configured to pre-calculate a series of segmentations of the object using a series of probability thresholds, and to allow the adjustment of said probability threshold by enabling the user to select the probability threshold from the series of probability thresholds. By pre-calculating the segmentations, the user may quickly see the result of an adjusted probability threshold.

Optionally, the first probability threshold is algorithmically selected so that a cost function which quantifies a segmentation quality is at a maximum value, and wherein the second probability threshold is algorithmically selected so that the cost function is at a minimum value. The quality of the segmentation may be algorithmically determined using a cost function. By selecting one probability threshold to obtain an optimum segmentation according to the cost function and the other probability threshold to obtain a worst segmentation according to the cost function, the difference between both segmentations may be maximized, which may make it easier for the user to determine the (un)certainty of the classification technique on the object boundaries. For example, if despite the maximized difference between the segmentations, the object boundary does not or only minorly shift between both segmentations, this may indicate that the classification technique is relatively certain of the object boundary.

Optionally, the processor subsystem is configured to obtain a series of segmentations of the object using a respective series of probability thresholds and to generate the display data to show a visual representation of the series of segmentations, for example as an animation. It may be valuable for the user to be able to compare more than two segmentations of the object obtained using different probability thresholds. By visualizing such a series, e.g., as an animation, the user may obtain a better indication how certain the classification technique is of the object boundaries in the segmentations.

Optionally, the processor subsystem is configured to obtain the first segmentation and second segmentation for two or more objects, e.g., from a same image or from different images. and display the visual representation of the first segmentation and the visual representation of the second segmentation for the two or more objects simultaneously or consecutively. This way, a user, such as a radiologist, may easily verify if a selected probability threshold is acceptable for both objects.

Optionally, the processor subsystem is further configured to extract a feature from the segmentation of the object to obtain a feature value, wherein extracting the feature comprises obtaining a first feature value from the first segmentation of the object and a second feature value from the second segmentation of the object, and wherein generating the display data further comprises showing a visual representation of the first feature value with the first segmentation and a visual representation of the second feature value with the second segmentation. Such features may also be referred to as 'secondary' features with the primary feature being the segmentation itself, or as 'metrics'. Examples of secondary features (or 'metrics') include, but are not limited to, a size of the object, an orientation of the object, a smoothness of the boundary of the object, etc. In general, a secondary feature may be a characterization of the object, such as a numerical characterization. By visualizing the secondary feature for both segmentations in addition to the segmentations themselves, the user may obtain a better indication how certain the classification technique is of the object boundaries in the segmentations. For example, if the secondary feature 'size' varies greatly in value between the segmentations, this may be an indication that transition region is quite wide, meaning that the classification technique is relatively uncertain of the exact boundary of the object. Examples of visualizations of the values of secondary features include bars, lines, text, etc.

Optionally, the image data is 2D image data, and the processor subsystem is configured to obtain the segmentation as a 2D segmentation of the object.

Optionally, the image data is 3D image data, and the processor subsystem is configured to obtain the segmentation as a 3D segmentation of the object, for example using a 3D mesh.

In a further aspect of the invention, a system is provided for segmenting an object in image data, comprising:
- an input interface for accessing the image data;
- a processor subsystem configured to:
   - apply a classification technique to the image data to obtain a probability map for the image data, wherein the probability map shows, for a respective image element of the image data, a probability of the image element belonging to the object;
   - obtain a segmentation of the object by identifying a boundary of the object using the probability map and using a probability threshold, wherein the probability threshold, when applied to the probability of the respective image element, indicates whether the image element belongs to the object or not, and wherein the obtaining of the segmentation comprises obtaining a first segmentation of the object using a first probability threshold and a second segmentation of the object using a second probability threshold; and
   - generate display data comprising a visual representation of the first segmentation and a visual representation of the second segmentation; and
- a display output interface for displaying the display data on a display.

In a further aspect of the invention, a computer-implemented method is provided for segmenting an object in image data, comprising:
- accessing the image data;
- applying a classification technique to the image data to obtain a probability map for the image data, wherein the probability map shows, for a respective image element of the image data, a probability of the image element belonging to the object;
- obtaining a segmentation of the object by identifying a boundary of the object using the probability map and using a probability threshold, wherein the probability threshold, when applied to the probability of a respective image element, indicates whether the image element belongs to the object or not, and wherein the obtaining of the segmentation comprises obtaining a first segmentation of the object using a first probability threshold and a second segmentation of the object using a second probability threshold;
- generating display data comprising a visual representation of the first segmentation and a visual representation of the second segmentation; and
- outputting the display data for display on a display.

It will be appreciated by those skilled in the art that two or more of the above-mentioned embodiments, implementations, and/or optional aspects of the invention may be combined in any way deemed useful.

Modifications and variations of the system, the computer-implemented method and/or the computer program product, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a system for segmenting an object in image data, with the system comprising a user interface subsystem to enable a user to interact with the system;
Fig. 2A illustrates how the segmentation of a tumour varies as a function of a probability threshold used during segmentation, with the segmentation and a size of the tumour being visualized, and the probability threshold being user-adjustable by a slider via which the user may select the allowed uncertainty and thereby the probability threshold;
Fig. 2B is similar to Fig. 2A except that additionally a second segmentation is shown which is obtained using a reference probability threshold, with both segmentations being shown simultaneously onscreen as overlays on top of each other;
Figs. 2C and 2D are similar to Figs. 2A and 2B, respectively, except that the segmentations are 3D mesh-based segmentations instead of 2D contours;
Figs 3A and 3B show screenshots of an exemplary graphical user interface which allows a user to adjust the probability threshold used for tumour segmentation;
Fig. 4 shows a method for segmenting an object in image data; and
Fig. 5 shows a non-transitory computer-readable medium comprising data.

It should be noted that the figures are purely diagrammatic and not drawn to scale. In the figures, elements which correspond to elements already described may have the same reference numerals.

### DETAILED DESCRIPTION OF EMBODIMENTS

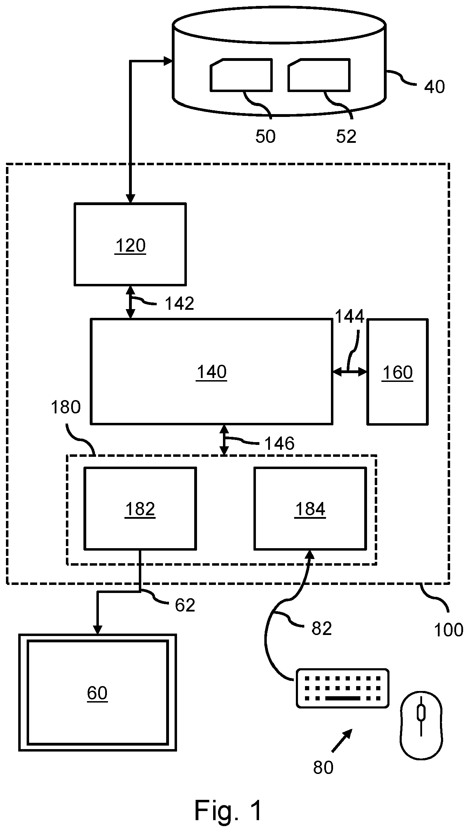

Fig. 1 shows a system 100 for segmenting an object in image data. The system 100 is shown to comprise a data storage interface 120 to a data storage 40. The data storage 40 may comprise image data 50 to be segmented. For example, the image data 50 may be medical image data, e.g., a 2D image or a 3D image, and may comprise (in that it depicts) an anatomical structure or a part of an anatomical structure which is to be segmented by the system 100. The data storage 40 may also store other types of data, such as segmentation data 52 representing a result of the segmentation or model data representing a machine learned model (not shown in Fig. 1). In general, the data storage 20 may serve as short term storage and/or as long-term data storage. In the example of Fig. 1, the data storage interface 120 is shown to be connected to an external data storage 40, such as a network-accessible data storage 40. Alternatively, the data storage 40 may be an internal data storage of the system 100 (not shown in Fig. 1). In general, the data storage interface 120 may take various forms, such as a hard disk or solid-state disk interface to one or more hard disks and/or solid-state disks, or a network interface to a Local Area Network (LAN) or to a Wide Area Network (WAN). In general, the data storage interface 120 may represent an example of an input interface as described elsewhere in this specification.

The system 100 is further shown to comprise a processor subsystem 140 configured to internally communicate with the data storage interface 120 via data communication 142, with a memory 160 via data communication 144 and with a user interface subsystem 180 via data communication 146. The memory 160 may for example be a volatile memory in which a computer program may be loaded which may cause the processor subsystem 140 to carry out functions which are described in this specification, for example in relation to segmenting an object in image data using a probability threshold.

In some embodiments, the system 100 may comprise a user interface subsystem 180, which user interface subsystem may be configured to, during operation of the system 100, enable a user to interact with the system 100, for example using a graphical user interface. In particular, as also described elsewhere, the graphical user interface may enable the user to obtain visual feedback of the segmentation and to adjust parameters of the segmentation, for example a probability threshold used in the segmentation as explained elsewhere in this specification. For that and other purposes, the user interface subsystem 180 is shown to comprise a user input interface 184 configured to receive user input data 82 from one or more user input devices 80 operable by the user. The user input devices 80 may take various forms, including but not limited to a keyboard, mouse, touch screen, microphone, etc. Fig. 1 shows the user input devices to be a keyboard and mouse 80. In general, the user input interface 184 may be of a type which corresponds to the type of user input device(s) 80, i.e., it may be a thereto corresponding type of user device interface. The user interface subsystem 180 is further shown to comprise a display output interface 182 configured to provide display data 62 to a display 60 to visualize output of the system 100. In the example of Fig. 1, the display is an external display 60. Alternatively, the display may be an internal display of the system 100 (not shown in Fig. 1).

In some embodiments, the processor subsystem 140 may be configured to, during operation of the system 100, apply a classification technique to the image data 50 to obtain a probability map for the image data. The probability map may show, for a respective image element of the image data, a probability of the image element belonging to the object. The processor subsystem 140 may be further configured to obtain a segmentation of the object by identifying a boundary of the object using the probability map and using a probability threshold, wherein the probability threshold, when applied to the probability of the respective image element, indicates whether the image element belongs to the object or not, and wherein the obtaining of the segmentation comprises obtaining a first segmentation of the object using a first probability threshold and a second segmentation of the object using a second probability threshold. The processor subsystem 140 may be further configured to generate display data 62 be shown on the display 60. The display data 62 may comprise a visual representation of the first segmentation and a visual representation of the second segmentation. Here and elsewhere, the term 'visual' may refer to the representation being visually perceivable, with no other limitation being intended, e.g., to the form of visualization.

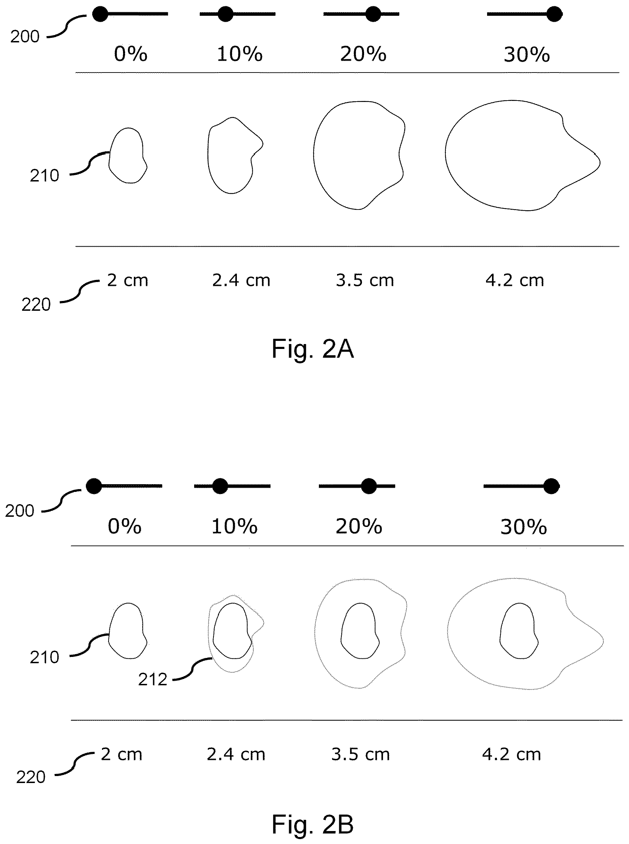

These and other operations of the system 100, and various optional aspects thereof, will be explained in more detail with reference to Fig. 2A and following.

In general, the system 100 may be embodied as, or in, a single device or apparatus. The device or apparatus may be a general-purpose device or apparatus, such as a workstation or a computer, but may also be application-specific, such as a patient monitor. The device or apparatus may comprise one or more microprocessors which may represent the processor subsystem, and which may which execute appropriate software. The software may have been downloaded and/or stored in a corresponding memory, e.g., a volatile memory such as RAM or a non-volatile memory such as Flash. Alternatively, the functional units of the system, e.g., the input interface, the user interface subsystem, and the processor subsystem, may be implemented in the device or apparatus in the form of programmable logic, e.g., as a Field-Programmable Gate Array (FPGA). In general, each functional unit of the system 100 may be implemented in the form of a circuit. It is noted that the system 100 may also be implemented in a distributed manner, e.g., involving different devices or apparatuses. For example, the distribution may be in accordance with a client-server model, e.g., using a server and workstation. For example, the user input interface and the display output interface may be part of the workstation, while the processor subsystem may be a subsystem of the server. It is noted that various other distributions are equally conceivable.

The following describes embodiments of the system 100 of Fig. 1 in which the system is used for the segmentation of medical image data, for example image data obtained by an imaging modality such as MRI, CT, X-Ray, ultrasound, etc. It will be appreciated, however, that the following equally applies to the segmentation of other types of image data and objects. Non-limiting examples of such other types of image data include, but are not limited to, (3D) camera data, satellite image data, geographical information which is representable as images, etc. As explained elsewhere, in the segmentation of medical images using probabilistic classification techniques, and in particular using probabilistic AI-based classification techniques, it is of relevance to provide a user with an indication of the (un)certainty of how likely the segmented boundary of the object is expected to match the actual boundary of the object. For that purpose, the system 100 of Fig. 1 may visualize the direct consequence(s) of the uncertainty of the segmentation(s) obtained by the system.

This may be further explained with reference to Fig. 2A, which shows a slider 200, which may be presented by the system to a user via a graphical user interface. By operating the slider 200, the probability threshold used in the segmentation may be adjusted. In the left-most example of Fig. 2A, the slider 200 may be set to 0% on a scale relating to the uncertainty of the classification. In this example, the slider 200 is set such that 0% uncertainty is accepted. This may correspond to a probability threshold of 100%, meaning that only image elements which are classified to belong to the object with a probability of 100% are indeed marked as 'object' in the object map. In a basic example, each probability in the probability map may be compared with the probability threshold, and if it is equal or larger than the probability threshold, the corresponding image element in the object mask may be set to '1' and otherwise to '0'. It will be appreciated that the object map may also take another form. For example, the object mask may be comprised of labels which indicate to which object an image element belongs. With continued reference to Fig. 2A, as a result of the thresholding, an object mask may be obtained from which a segmentation 210 of the object may be obtained, e.g., in a manner as known per se in the image segmentation field, for example by edge detection, contour finding, binary erosion, etc. Fig. 2A further shows a secondary feature 220 being visualized which may be derived from the segmentation 210, being in this example the size of the object, being in this example "2 cm". The user may adjust the slider 200, for example by setting it to 10%, 20% or 30%, which may correspond to probability thresholds of respectively 90%, 80% and 70%. By accepting more uncertainty, the object may appear larger in the respective segmentations, which larger size is also shown by way of the secondary features, e.g., "2.4 cm", "3.5 cm", "4.2 cm". In other words, the segmentation may shrink or grow depending on the position of the slider 200.

In the example of Fig. 2A, the different segmentations may be shown consecutively, in that if the slider is adjusted, the previous segmentation may be replaced by a current segmentation corresponding to the current position of the slider. Alternatively, the segmentations may be shown simultaneously, e.g., next to each other or overlaid. Although not shown in Fig. 2A, the user may also select a segmentation for further use, e.g., as a 'final' segmentation. This way, users may have control over what amount of uncertainty they accept, and the segmentation and optional secondary features may be adjusted accordingly.

Fig. 2B shows a similar example as in Fig. 2A, except that here two segmentations are shown simultaneously, namely a reference segmentation obtained using a reference probability threshold and another segmentation obtained using a user-selected probability threshold, with the latter threshold being selectable by way of the slider 200. The reference segmentation 210 may for example correspond to an uncertainty of 0% (probability threshold of 100%) and may be shown as a black outline simultaneously with the other segmentation 212 which corresponds to the user-selected probability threshold. Although not explicitly shown in Fig. 2B, also both probability thresholds may be adjusted.

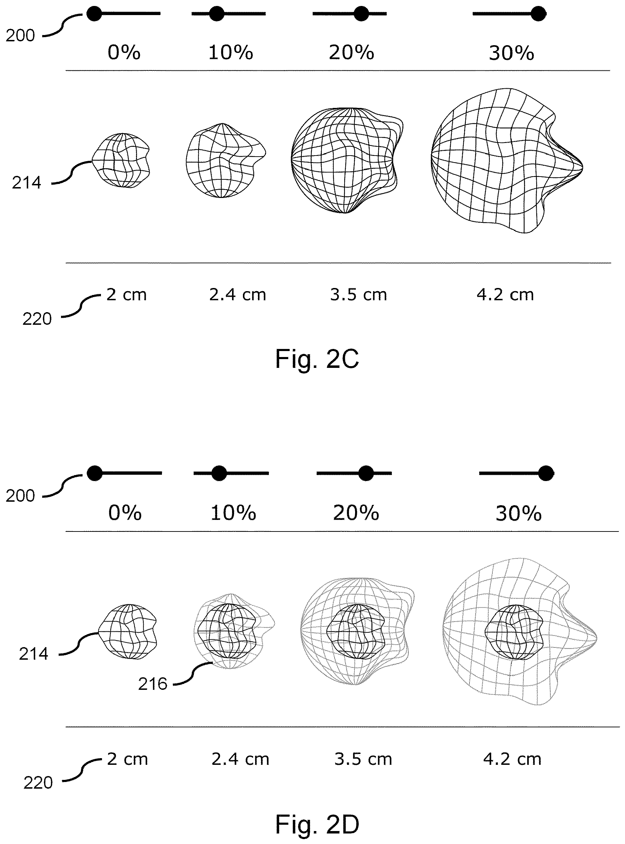

Fig. 2C and Fig. 2D are similar to Figs. 2A and 2B, respectively, except that the segmentations are a 3D mesh-based segmentation instead of 2D contours. Accordingly, Fig. 2C shows a 3D mesh 214 which delineates the boundary of the object in the 3D image data, while Fig. 2D shows the 3D mesh 214 as a reference segmentation and simultaneously with a 3D mesh 216 obtained using a user-selected probability threshold.

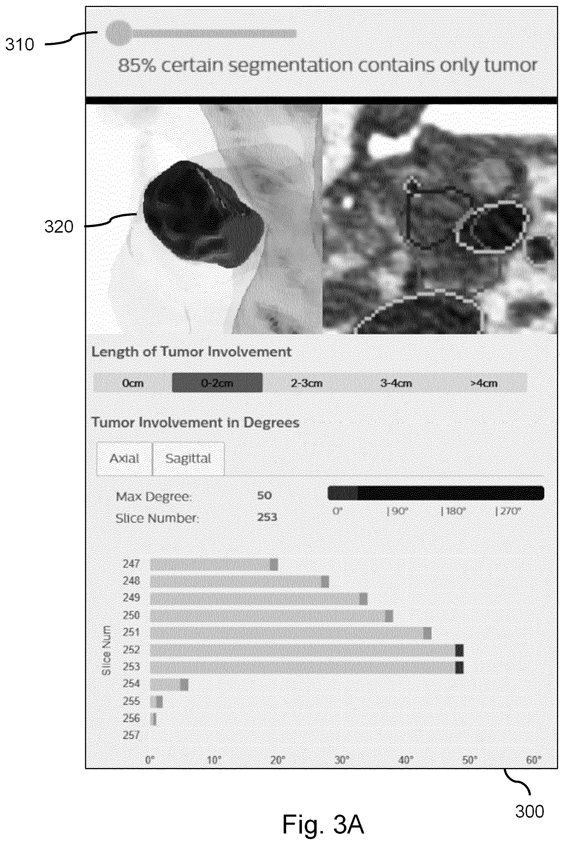

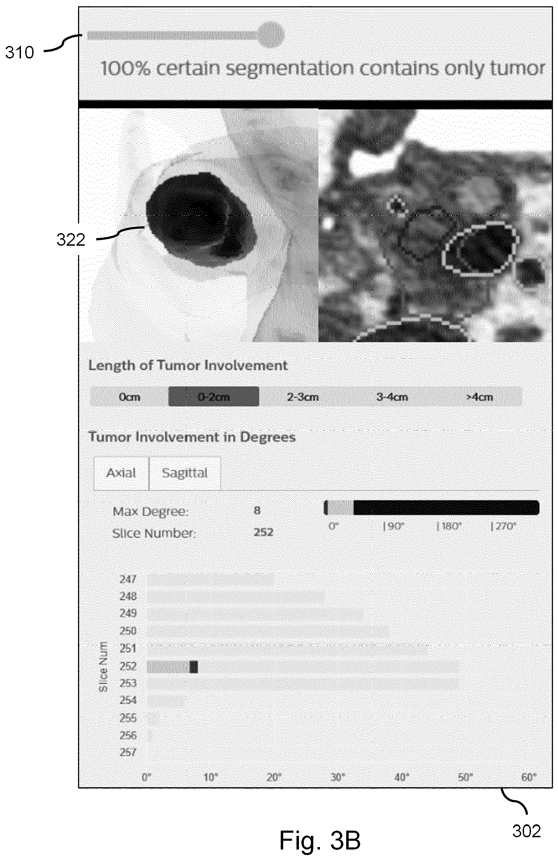

Figs 3A and Fig. 3B show screenshots of an exemplary graphical user interface 300, 302 which allows a user to adjust the probability threshold used for tumour segmentation. In this graphical user interface, at the top, a slider 310 is shown which gives the user control over the uncertainty threshold. Directly below the slider are a rendering of the 3D mesh 320, 322 (left) and the 2D segmentation outlines overlaid on a CT slice (right). Colours in the mesh (not shown in Figs. 3A, 3B) may represent different structures. For example, the colour yellow may denote a tumour, blue may denote a blood vessel, pink may denote the contact area between tumour and blood vessel, etc. It is noted that the contact area, also known as the tumour involvement, is crucial for assessing the resectability of the tumour. Below those 2D and 3D images are visualizations of secondary features derived from the contact area, such as the tumour involvement angle per slice (this being the angle that the contact area makes with regards to the centre point of the blood vessel), and the length of tumour involvement across slices. The slider 310 may control the uncertainty threshold for the tumour segmentation. As can be seen when comparing Figs. 3A and 3B, when the uncertainty threshold is adjusted, the consequences can be observed directly, as the size of the segmentation 320, 322 changes as well as the depicted secondary features.

It will be appreciated that a user-adjustable probability threshold may be implemented in various ways. For example, the user may directly adjust the probability threshold, or indirectly, e.g., by adjusting an (un)certainty threshold. For such adjustment, a graphical user element may be used, such as a slider. Alternatively, any other type of user input may be used, for example key presses, mouse clicks. The adjustment of the probability threshold may also be (partially) automated, for example in the form of an animation. By way of such an animation, the different segmentations may be shown consecutively to the user.

Furthermore, after adjusting the probability threshold, the segmentation and optional secondary features may change in accordance with the adjusted probability threshold. The information required for such changes may already be calculated beforehand, such that, when the probability threshold is adjusted, only the visibility of the corresponding information is changed. For example, if the probability threshold is set to 80%, the segmentation and secondary features corresponding to 80% may be selected for visualization and the others may be hidden. This may be implemented by the system pre-calculating the segmentations and secondary features for a series of probability thresholds and allowing the user to adjust the probability threshold by selection of a threshold from the series of probability thresholds. In other examples, the probability map may be pre-calculated but the object map may be recalculated after an adjustment of the probability threshold, for example by applying the adjusted probability threshold to the probability map.

With continued reference to the probability map and the object map, the following is noted. The classification technique may be a probabilistic AI classification technique (e.g., a Bayesian model, using Monte Carlo dropout). Such techniques may yield a probability map. From this map, a mean label value for each image element (e.g., pixel or voxel) may be derived. For example, the label may be 1 for tumour and 0 for background. A mean label value of 0.6 could indicate a probability of 60% that the image element is part of a tumour. The probability map may then be thresholded in accordance with the selected probability threshold, e.g., by comparing each probability to the probability threshold.

It is further noted that the object mask may be a binary mask. If the mask is a 3D mask for 3D image data, the mask may be translated into a mesh, for example using the marching cube algorithm. If the mask is a 2D mask for 2D image data, the border in the object mask may be detected in various ways, e.g., using edge detection or binary erosion.

In general, the mapping of an (un)certainty value to a probability value, for example the mapping of the (un)certainty value selected by a slider to a probability threshold, may be linear, in that an uncertainty of 0% may correspond to a probability threshold of 100%, an uncertainty of 50% may correspond to a probability threshold of 50%, and an uncertainty of 100% may correspond to a probability threshold of 0%. However, the mapping may also be non-linear, for example to take into account a difference in interpretation of the (un)certainty between the user and the classification technique. Furthermore, while the probability threshold is shown in some embodiments to be used in a basic thresholding operation, the probability threshold may also be used in a more complex function, e.g., which takes surrounding probabilities into account, or used as a relative threshold (e.g., relative to other local probabilities) instead of as an absolute threshold.

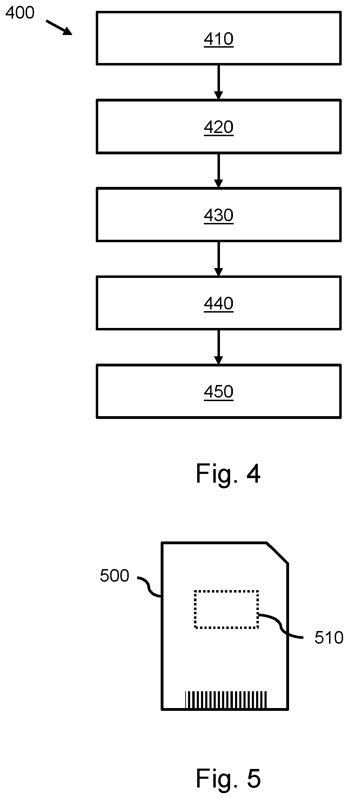

Fig. 4 shows a block-diagram of computer-implemented method 400 for segmenting an object in image data. The method 400 may correspond to an operation of the system 100 of Fig. 1. However, this is not a limitation, in that the computer-implemented method 400 may also be performed using another system, apparatus or device.

The method 400 is shown to comprise, in an operation titled "ACCESSING IMAGE DATA", accessing 410 image data as described elsewhere in this specification, and in an operation titled "APPLYING CLASSIFICATION TECHNIQUE TO THE IMAGE DATA", applying 420 a classification technique to the image data to obtain a probability map for the image data, wherein the probability map shows, for a respective image element of the image data, a probability of the image element belonging to the object, in an operation titled "OBTAINING AT LEAST TWO SEGMENTATIONS OF OBJECT", obtaining 430 a segmentation of the object by identifying a boundary of the object using the probability map and using a probability threshold, wherein the probability threshold, when applied to the probability of a respective image element, indicates whether the image element belongs to the object or not, and wherein the obtaining of the segmentation comprises obtaining a first segmentation of the object using a first probability threshold and a second segmentation of the object using a second probability threshold, in an operation titled "GENERATING DISPLAY DATA SHOWING THE TWO SEGMENTATIONS", generating 440 display data comprising a visual representation of the first segmentation and a visual representation of the second segmentation, and in an operation titled "OUTPUTTING DISPLAY DATA TO A DISPLAY", outputting 450 the display data for display on a display.

It will be appreciated that in general, operations of method 400 of Fig. 4 may be performed in any suitable order, e.g., consecutively, simultaneously, or a combination thereof, subject to, where applicable, a particular order being necessitated, e.g., by input/output relations. Operations may also be performed as part of other operations.

The method may be implemented on a computer as a computer implemented method, as dedicated hardware, or as a combination of both. As also illustrated in Fig. 5, instructions for the computer, e.g., executable code, may be stored on a computer readable medium 500, e.g., in the form of a series 510 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 5 shows a memory device 500.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of' when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

### List of reference numbers

The following list of reference numbers is provided for facilitating the interpretation of the drawings and shall not be construed as limiting the claims.
- 40: data storage
- 50: image data
- 52: segmentation data

- 60: display
- 62: display data
- 80: user input device(s)
- 82: user input data

- 100: system for segmenting an object in image data
- 120: data storage interface
- 140: processor subsystem
- 142-146: data communication
- 160: memory
- 180: user interface subsystem
- 182: display output interface
- 184: user input interface

- 200: slider to select (un)certainty
- 210, 212: 2D contour-based segmentation of object
- 214, 216: 3D mesh-based segmentation of object
- 220: secondary feature derived from segmentation

- 300, 302: screenshot of segmentation user interface
- 310: slider to select (un)certainty
- 320, 322: segmentation of tumour

- 400: method for segmenting object in image data
- 410: accessing image data
- 420: applying classification technique to the image data
- 430: obtaining at least two segmentations of object
- 440: generating display data showing the two segmentations
- 450: outputting display data to a display

- 500: non-transitory computer-readable medium
- 510: data representing computer program

## Claims

1. A system (100) for segmenting an object in image data, comprising:
- an input interface (120) for accessing the image data (50);
- a processor subsystem (140) configured to:
- obtain a segmentation (210-216, 320, 322) of the object, wherein the segmentation is comprised of image elements of the image data which are probable part of the object by a probability value of a respective image element exceeding a probability threshold, wherein the obtaining of the segmentation comprises obtaining a first segmentation (320) of the object using a first probability threshold and a second segmentation (322) of the object using a second probability threshold; and
- generate display data (62) comprising a visual representation of the first segmentation and a visual representation of the second segmentation; and
- a display output interface (182) for displaying the display data on a display.

2. The system (100) according to claim 1, wherein the processor subsystem (140) is configured to:
- obtain a probability map for the image data, for example by applying a classification technique to the image data, wherein the probability map shows, for a respective image element of the image data, a probability of the image element belonging to the object;
- obtain the first segmentation and the second segmentation (210-216, 320, 322) of the object by, for a respective segmentation, identifying a boundary of the object using the probability map and using a respective probability threshold.

3. The system (100) according to claim 2, wherein the processor subsystem (140) is configured to obtain the segmentation of the object by:
- applying the probability threshold to the probability map to obtain an object mask;
- determining the boundary of the object in the object mask.

4. The system (100) according to any one of claims 1 to 3, wherein the processor subsystem (140) is configured to generate the display data (62) to show the visual representation of the first segmentation (320) and the visual representation of the second segmentation (322) simultaneously or consecutively on the display.

5. The system (100) according to claim 4, wherein the visual representation of the first segmentation and the visual representation of the second segmentation are shown as respective overlays over the image data (50).

6. The system (100) according to any one of claims 1 to 5, wherein at least one of the first probability threshold and the second probability threshold is user-adjustable.

7. The system (100) according to any one of claims 1 to 6, wherein the first probability threshold is predetermined or algorithmically selected, and the second probability threshold is user-adjustable.

8. The system (100) according to claim 6 or 7, wherein the system further comprises a user input interface (180) for receiving user input data (82) from a user input device (80) operable by a user, wherein the processor subsystem (140) is configured to generate the display data (62) to show a graphical user interface to the user, wherein the graphical user interface comprises a graphical user interface element to enable the user to adjust said probability threshold, for example in form of a slider (200, 310).

9. The system (100) according to any one of claims 6 to 8 in as far as dependent on claim 2, wherein the processor subsystem (140) is configured to, in response to an adjustment of said probability threshold by the user, obtain an adjusted segmentation of the object by reapplying said adjusted probability threshold to the probability map without recalculating the probability map.

10. The system (100) according to any one of claims 6 to 9, wherein the processor subsystem (140) is configured to pre-calculate a series of segmentations of the object using a series of probability thresholds, and to allow the adjustment of said probability threshold by enabling the user to select the probability threshold from the series of probability thresholds.

11. The system (100) according to any one of claims 1 to 11, wherein the first probability threshold is algorithmically selected so that a cost function which quantifies a segmentation quality is at a maximum value, and wherein the second probability threshold is algorithmically selected so that the cost function is at a minimum value.

12. The system (100) according to any one of the above claims, wherein the processor subsystem (140) is configured to obtain a series of segmentations of the object using a respective series of probability thresholds and to generate the display data to show a visual representation of the series of segmentations, for example as an animation.

13. The system (100) according to any one of claims 1 to 12, wherein the processor subsystem (140) is further configured to extract a feature from the segmentation of the object to obtain a feature value, wherein extracting the feature comprises obtaining a first feature value from the first segmentation of the object and a second feature value from the second segmentation of the object, and wherein generating the display data (62) further comprises showing a visual representation of the first feature value with the first segmentation and a visual representation of the second feature value with the second segmentation.

14. A computer-implemented method (400) for segmenting an object in image data, comprising:
- accessing (410) the image data;
- obtaining (420, 430) a segmentation of the object, wherein the segmentation is comprised of image elements of the image data which are probable part of the object by a probability value of a respective image element exceeding a probability threshold, wherein the obtaining of the segmentation comprises obtaining a first segmentation of the object using a first probability threshold and a second segmentation of the object using a second probability threshold;
- generating (440) display data comprising a visual representation of the first segmentation and a visual representation of the second segmentation; and
- outputting (450) the display data for display on a display.

15. A transitory or non-transitory computer-readable medium (500) comprising data (510) representing a computer program, the computer program comprising instructions for causing a processor system to perform the method according to claim 14.
